# EUROPÄISCHE PATENTANMELDUNG

(11) **EP 4 067 062 A1**
(43) Veröffentlichungstag der Anmeldung: **05.10.2022**
(21) Anmeldenummer: 22166173.9
(22) Anmeldetag: 31.03.2022
(51) Int. Cl.: B32B 5/02, B32B 5/26, B32B 7/14, B32B 7/09, B32B 27/30, B32B 3/12, B32B 3/18, F16L 5/02, B32B 37/00, B65H 27/00

(54) **ABDICHTUNG FÜR KABELROHRDURCHFÜHRUNGEN, FUGENKAMMERN, SPALTEN, RISSEN, BETON- UND STEINVLIESÜBERDECKUNGEN GEGEN AUFSTEIGENDE WASSERDURCHDRINGUNG, SOWIE VORRICHTUNGEN UND VERFAHREN ZUR HERSTELLUNG VON ABDICHTUNGEN UND WASSERSPEICHER**

(30) Priorität: 31.03.2021 EP 21166364
(71) Anmelder: Wolf, Roland, 70437 Stuttgart (DE)
(72) Erfinder: Wolf, Roland, 70437 Stuttgart (DE)
(74) Vertreter: Jeck, Jonathan

(57) **Zusammenfassung**

Die Erfindung betrifft eine Abdichtung für Kabelrohrdurchführungen, Fugenkammern, Spalten, Rissen, Beton- und Steinvliesüberdeckungen gegen Wasserdurchdringung. aufweisend Gewirkedichtbänder mit, vorzugsweise basierend auf, SAP-Vlies, die ein- oder mehrlagig mit, vorzugsweise jeweils, einseitig kaschiertem 3D-AB Abstandsgewirken oder anderen textilen Geweben als Schichten zur Polymergel-Speicherung gebildet sind.

## Beschreibung

Die Erfindung betrifft eine Abstands-Laminiervorrichtung (AL) und -Nähvorrichtung (AN), in Ausgestaltung einer Vorrichtung zum partiellen Verbinden von bis zu sechs Schichten gleicher oder unterschiedlicher Materialien mittels Klebeband oder Nähfäden zu selbstinjizierenden (SI) und stark quellenden (SQ) Gewirke-Abdichtbändern und Anwendung dieser für alle Abdichtbereiche in Ausgestaltung von Lieferbreiten von 5 cm bis 160 cm und Lieferlängen bis über 40 m, gemäß dem Oberbegriff des Anspruchs 1.

Die selbstinjizierenden (SI) saugenden und stark quellenden (SQ) Bänder können nach weiteren Verarbeitungen anwendungsspezifisch als Abdichtband oder Abdichtstern gegen Wasserfortleitung, Feuchtesauger, Wasserspeicher oder als landwirtschaftliches Bodenverbesserungsmittel verwendet werden, gemäß dem Oberbegriff des Anspruchs 2.

Die Aufgabe der Erfindung besteht darin, eine Abstands-Laminier- oder Nähvorrichtung (AL)(AN) bereitzustellen, um aus PES-/ PP-Bändern, PES - SAP -Vlies- Bändern oder PES- Gewebebändern und PVA- SAP-K50/x Kettengliedern, mehrschichtige selbstinjizierende (SI) saugende, stark quellende (SQ) und wasserspeichernde Dichtbänder herzustellen, um diese anwendungsspezifisch zur Abdichtung von großen und tiefen Löchern, Spalten oder Rissen gegen Fortleitung von drucklos ablaufendem Wasser zu nutzen. Darüber hinaus muss eine Abdichtwirkung auch nach dynamischer Beanspruchung in Folge von Bewegungen von Fugen-Kammer-Abdichtungen bei Montageausführungen sowie thermischen Bewegungen von Bauwerksfugen in horizontaler, vertikaler oder bogenförmiger Form gegeben sein.

Vergleichs- Untersuchungsergebnisse zu gattungsgemäßen Konstruktionen zeigen alle negativen Ergebnisse.

### PVA-SAP-Quellpulver-Ketten (PK-I) zur selbstinjizierenden Fugenflanken-Abdichtung (SI-FF)

Zur Abdichtung von Fugen werden im Allgemeinen Dichtungsmaterialien (Profile) aus Kunststoffmassen mit rechteckigem oder rundem Querschnitt in die Fuge eingelegt. Bei Kontakt mit Wasser quellen diese in der Höhe um max. 100% auf und decken Risse und Löcher ab. Bei dynamischer Beanspruchung in Folge von Fugenbewegungen wie z.B. Fugenverbreiterung verlieren die Dichtprofile ohne Pressdruck, wie er beispielsweise durch p-Mehrwegabdichtungen erzeugt wird, ihre Haftung zum Beton und werden undicht.

Im Vergleich dazu verwandeln sich nach der vorliegenden Erfindung PVA-SAP-(superabsorbierendes Polymer, vorzugsweise verpackt in Polyvinylalkoholfolie) Quellpulverketten, die vorzugsweise in Kombination mit p-Mehrwegabdichtungen zur Fugenabdichtung eingesetzt werden, bei einem Kontakt mit Wasser in eine gelartige Masse mit starkem Quellverhalten (mehr als 10000-fach), die selbstinjizierend in Risse und Löcher eindringt und diese zuverlässig abdichtet und/oder das Wasser speichert. Durch das hohe Quellverhalten bleibt die Dichtwirkung auch bei Änderungen der Fugenbreite in Folge dynamischer Beanspruchungen zuverlässig bestehen. Bei langanhaltender Trockenheit wandelt sich die Gelmasse wieder in Pulver zurück und quillt bei erneutem Wasserkontakt erneut auf.

Im Vergleich zur konventionellen Fugenabdichtung mit flüssigen Injektionsmitteln oder ausschäumen mit Betonschaum, welche standardmäßig über Injektionsbohrlöcher eingebracht werden, sind bei Einsatz der PVA-SAP-Quellpulverketten keine Bohrungen notwendig. Das Anbringen von Injektionsbohrlöchern ist zeitaufwendig und führt bei 90 % der Bohrungen zu Schäden an den Fugenflanken.

Selbstinjizierende PVA-SAP-Quellpulverketten bieten eine gleichwertige Dichtwirkung gegen drucklos ablaufendes Wasser wie die konventionelle Rissvergelung und sind im Vergleich dazu sauber und schnell (ca. 4 h für Fugenbreite 2 cm bis 12 cm, Fugenlänge bis zu 25 m) durchzuführen.

Die erfindungsgemäße Abstands-Laminier- (AL) und -Nähvorrichtung (AN) und die damit hergestellten selbstinjizierenden (SI) Abdichtbänder der Erfindung als Feuchte- oder Wassersauger oder Wasserspeicher sollen universell für ein breites Anwendungsspektrum geeignet sein, eine hohe Quellpolymerbindung in Form einer Sperrschicht für Anwendungen bei "Kdf' Kabeldurchführungs-Abdichtungen gemäß den Prüfgrundsätzen PG-DM/PK 1 und 2 oder alternativ eine sehr hohe Polymergel- Verteilung (Austritt aus dem Dichtband) oder Polymergelspeicherung für Anwendungen zur (FK) Fugenkanten-Abdichtung gemäß Prüfgrundsätzen PG-FMAB 1 und 2 ermöglichen.

Die Aufgabe wird erfindungsgemäß mit der SAP-Vlies, 3D-AB-Gewirke und Abstands-Laminier- (AL) und Nähvorrichtung (AN) nach Anspruch 1 gelöst.

Die SAPV- 3D-AB-Gewirke Abstands-Laminier- (AL) und Nähvorrichtung (N) 1 besteht aus einem zugfesten schrumpffreien PP-Gewebe, auf dem in Längsrichtung im Abstand von, vorzugsweise etwa 5 cm bis 160 cm, vorzugsweise je Lage bis zu 33 Stück Klebebänder aufgebracht sind. Über dem PP-Gewebe befindet sich mindestens ein zugfestes PES-SAP-Vlies, auf dem gleichwertig zur ersten Lage 33 Stück Klebebänder aufgebracht sind.

Unmittelbar über den beiden, mit Klebebändern belegten Bändern, befindet sich ein PES- 3D-AB Abstandsgewirke mit einer Kaschierung zur Erzielung einer Polymergel-Sperrschicht zur Außenseite. Weitere Alternativen bestehen darin, dass anstatt am PP-Gewebe ein PES-3D-AB-Gewirke, oder anstatt dem PES-3D-AB Gewirke ein 3D-AB (RPL) Gewirke verwendet wird. Erfindungsgemäß ist vorgesehen, die Kleberbänder bereits nach dem Auflegen auf dem PP-Gewebe und auf dem PES-SAP-Vlies beim Zusammenführen der 3 Bänder ohne Druckbelastung miteinander zu verbinden.

Die SAPV, 3D-AB-Gewirke Abstands-Nähvorrichtung (AN) ist erfindungsgemäß vorgesehen, um alle miteinander zu verbindenden Schichten im losen oder laminierten Zustand in Abständen, von vorzugsweise 5 cm bis 160 cm parallel in Längsrichtung auf Längen von vorzugsweise bis zu 40 m, zu vernähen, um bei Verwendung als Polymergelspeicher für Fugenkammer-Abdichtungen mit durchgehenden Fugenkantenlöchern und/oder als Wasserspeicher zusätzlich die Dichtband-Endbereiche in Querrichtung zu vernähen, dass ein Aufplatzen der Nähte in Folge des entstehenden Polymergel-Pressdrucks vermieden wird und eine mehrfache Anwendung, wieder Verwendbarkeit des Dichtbandes möglich ist.

Die zweite Aufgabe wird erfindungsgemäß durch Verbindung von der Polymer-Quellpulverkettenmit einem 3D-AB (RPL) Gewirke-Abdichtband durch Optimierung der Laminiervorrichtung nach Anspruch 2 gelöst.

Die PVA-SAP-Kette - 3D-AB- (RPL) Gewirke- Abdichtband-Laminiervorrichtung 2, weist zugfestes PP-Gewebe, (RPL) Gewirkeband, vorzugsweise in Lieferbreiten von 13 cm, 25 cm oder einem Vielfachen bis zu 160 cm und Längen bis über 30 m, auf dem im Abstand von vorzugsweise 10 cm oder 20 cm je vorzugsweise 1 Klebeband oder -faden in Längsrichtung aufgebracht wird. Zwischen den beiden Klebeband-Fäden befinden sich vorzugsweise ein oder zwei parallel angeordnete superabsorbierende-Polymer- Quellpulverketten (PK-I), einseitig selbstklebend (PVA-SAP-K50/1/2). Zur Fugenkantenseite befindet sich ein 3D-AB (RPL) Gewirkeband mit sehr großen Polymer-Austrittsöffnungen oder ein 3D-AB Gewirkeband zur Polymergelspeicherung.

Vorzugsweise ist vorgesehen, die Klebebänder oder -fäden mittels Formschuh-Verfahren mit den beiden Kunststoffbahnen so miteinander zu verbinden, dass keine Druckbelastung auf das PVA-SAP-K50- Kettenglied einwirken kann.

Die Polymer-Pulverstickkette kann einen, vorzugsweise kaltwasserauflösenden PVA-, Schlauch aufweisen, welcher vorzugsweise mit Segmenten gebildet ist, in welchem das quellbare Polymer vorgesehen ist. Die Segmente und damit die darin enthaltenen Polymerportionen sind vorzugsweise stofflich voneinander getrennt. Besonders bevorzugt ist das 3D-AB-Gewirkeband wasserdurchlässig oder weist Öffnungen zum Eintritt von Wasser in das Innere des Schlauchs auf. Besonders bevorzugt ist der Schlauch ausgebildet, einem Quellwiederstand des Polymers nachzugeben ohne dabei aufzuplatzen oder zu zerreißen.

Die Erfindungen werden nun anhand von Ausführungsbeispielen näher erläutert.

Die fettgedruckten Figurenbezeichungen weisen auf die jeweilige Figur hin. Die eingerückten Figurenbezeichnungen weisen auf in den fettgedruckten Figuren dargestellte Elemente hin, welche in den eingerückt geschriebenen Figuren näher bezeichnete sind. Dies kann insbesondere bei Komposit Produkten/zusammengesetzten Produkten der Fall sein.

Nach einer bevorzugten Weiterbildung der Erfindung ist eine Abstands-Laminier- und/oder - Nähvorrichtung zur Herstellung von mehrschichtigen, selbstinjizierenden (SI), saugenden und stark quellenden (SQI) Gewirkedichtbändern basierend auf SAP-Vliesen vorgesehen, die in zwei bis über sechs Schichten mit einseitig kaschierten 3D-AB Abstandsgewirken, 3D-Abstands-Gewirken mit Polymergel-Austrittsöffnungen (RPL) oder anderen textilen Geweben vorzugsweise mittels selbstklebenden Bändern oder Nähfäden in definierten Abständen über eine Breite von vorzugsweise bis 160 cm und Längen bis vorzugsweise über 40 m verbunden werden und Anwendung dieser Gewirkedichtbänder gegen Wasserfortleitung als Feuchtesauger, Wasserspeicher, Riss- oder Lochfüller unter Erfüllung anwendungsspezifischer Eigenschaften einer hoher Polymergel- / Wasser-Speicherung oder einer Polymergel-Verteilung zur Abdichtung von Rissen oder Löchern bei Fugenflanken.

Nach einer zweckmäßigen Weiterbildung der Erfindung ist ein Abstands-Laminier- und/oder -Nähverfahren zur Herstellung von mehrschichtigen, selbst-injizierenden (SI), saugenden und stark quellenden (SQI) Gewirkedichtbändern basierend auf SAP-Vliesen, die in zwei bis über sechs Schichten mit einseitig kaschierten 3D-AB Abstandsgewirken, 3D-Abstands-Gewirken mit Polymergel-Austrittsöffnungen (RPL) oder anderen textilen Geweben mittels selbstklebenden Bändern in definierten Abständen vorzugsweise über eine Breite von vorzugsweise bis 160 cm und Längen bis vorzugsweise über 40 m verbunden werden und Anwendung dieser Gewirkedichtbänder gegen Wasserfortleitung als Feuchtesauger, Riss- oder Lochfüller unter Erfüllung anwendungsspezifischer Eigenschaften einer Polymergel-Verteilung zur Abdichtung von Rissen oder Löchern bei Fugenflanken.

Nach einer vorteilhaften Weiterbildung der Erfindung ist eine Abdichtung von Kabelrohrdurchführungen, Fugenkammern, Spalten, Rissen, Beton- und Steinvliesüberdeckungen gegen aufsteigende Feuchtigkeit oder Wasser in Folge von Witterungseinflüssen durch ein selbstinjizierendes (SI), saugendes und stark quellendes (SQI) Gewirkedichtband, basierend auf einem SAP-Vlies wobei das ein- oder mehrlagig eingebrachte, miteinander verklebte SAP-Vlies vorzugsweise mit einer einfachen Dicke von bevorzugt 0,41 mm, ein- oder beidseitige mit einem zur Außenseite kaschierten elastischen 3D-AB Abstandsgewirke verbunden ist und entsprechend der Anzahl der SAP-Vlieslagen vorzugsweise eine bis zu 15 mm hohe Polymergelschicht je SAP-Vlieslage bilden kann bzw. Wasser aufnehmen und speichern kann, oder in Ausgestaltung einer ein- oder beidseitigen Verbindung des SAP-Vlieses mit 3D-AB-Gewirken, vorzugsweise mittels der Abstands-Nähvorrichtung das Polymergel als Wasserspeicher binden kann, vorzugsweise nicht austreten und vorzugsweise sich nicht verteilen kann.

Zweckmäßiger Weise ist eine Abdichtung von Fugenflanken, Fugenkammern, Spalten, Rissen, Löchern, Beton- oder Steinüberdeckungen mittels selbstinjizierendem, superabsorbierendem Polymer (SAP) - Pulverketten-Injektionssystem vorgsesehen, wobei ein- oder zweireihig angeordneten (PVA-SAP-K) Sticks oder Pulverkettensegmente, vorzugsweise mit einem Gewicht von 10 g und einer Dicke ~ 5 mm pro Stick, mit einem selbstklebendem Band (BSK) an mindestens einem 3D-AB-RPL Gewirke angeordnet sind und vorzugsweise einen Austritt des Polymergels aus dem Gewirkedichtband zur Verfüllung von Löchern und Rissen vorzugsweise mit einer Höhe von 65 mm je Stock ermöglichen und/oder mittels Abstands-Nähvorrichtung eine Polymergelspeicherung zur Wasserspeicherung und Lochverpressung zu erzielen

Zweckmäßigerweise kann ein selbstinjizierendes superabsorbierendes Polymer-(SAP)- Pulverkettensystem und SAP-Vlies-Bandsystem vorgesehen sein, dass das quellförmige unlösliche vernetzte Polymer in trockener Pulverform in Sticks oder Ketten oder mechanisch verfestigte, vorzugsweise mit Korrosionsinhibitor, als SAP-Vlies nach Kontakt mit Wasser oder Wassergemischen zu einem nachgiebigen Gel aufquillt, in der offenporigen Seite eines 3D-AB-Abstandsgewirkes verpresst und/oder in Kombination mit einem druckelastischen SAP p-Mehrweg-Abdichtsystem ( (Ventil), Beton-, Stein- und Erdüberdeckung gegen Wasserfortleitung schützt und/oder als Polymergelspeicher dient, sowie mehrfach nach Austrocknung in Pulverform zurückgeht und nach erneutem Wasserkontakt wieder zu Gel aufquillt und Löcher in Fugenkanten, Ausbruchsstellen, Kiesnester, Risse gegen Wasserfortleitung abdichtet.

Abdichtung von Kabel- und Rohrdurchführungen, Fugenkammern, Spalten, Rissen, Löchern in Beton- oder Steinvliesüberdeckungen mit selbstinjizierenden superabsorbierenden Polymer (SAP) Pulverketten (PK-I) und (SAP-Vlies) Injektionssystem mittels der Abstands-Laminier- (AL) und/oder im -Nähvorrichtung (AN) universelle (SQ) Abdichtungs-Anwendungsbereiche vorzugsweise in Bandbreiten von 5 cm bis 160 cm und einer nach Wassereintritt entstehenden Polymergel-Speicherung vorzugsweise bis über 5 cm Höhe im 3D-AB-Abstandsgewirke erfolgt oder in Verbindung mit p-Mehrwegabdicht-systemen (Ventil) das Polymergel durch die Löcher des 3D-AB-RPL Reibschutz-Lochgewirkes mit bis zu 5 cm Höhe austritt, oder unter Anwendung des Abstands-Nähverfahrens gegen Wegschwemmen bis 3 m Wassersäule geschützt ist und für den Einsatz im Temperaturbereich von-40°C bis +70°C geeignet ist.

Es zeigen:
- **Fig. 1**: **Abstands-Laminiervorrichtung (AL)** Abstands-Laminiervorrichtung (AL) zur Verbindung von vorzugsweise zwei bis sechs Kunststoffbändern (Schichten) mittels Klebebänder oder - fäden als selbstinjizierendes (SI) saugendes und stark quellendes (SQ) Abdichtband.
- **Fig. 2**: **Formschuh-Laminiervorrichtung** Formschuh-Laminiervorrichtung zur Verpackung von ein oder zwei selbstklebenden PVA-SAP-K50/1/2 Pulverketten (PK-I) in ein PP-Gewebe- und 3D-AB (RPL) Gewirkeband mittels vorzugsweise zwei Klebebändern oder -fäden und/oder Formschuh.
- **Fig. 3**: **(SQ) Laminier-Bestandteile**
- **Fig. 3.1(a)**: **3D-AB Abstandsgewirke** Kurzbezeichnung: AB-Gewirke, Dicke vorzugsweise 2,5 mm zur Aufnahme und Speicherung von SAP Polymergel nach Wasserkontakt.

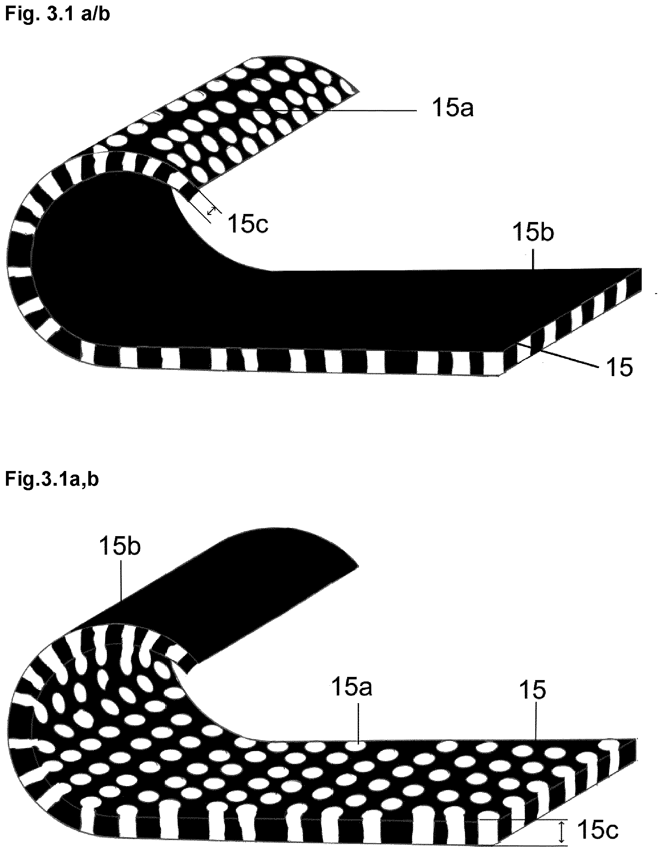

- **Fig. 3.1(b)**: **3D-AB-Gewirke Dicke 5 mm** Kurzbezeichnung: AB-Gewirke, Dicke vorzugsweise 5 mm zur Aufnahme und Speicherung von SAP-Polymergel nach Wasserkontakt

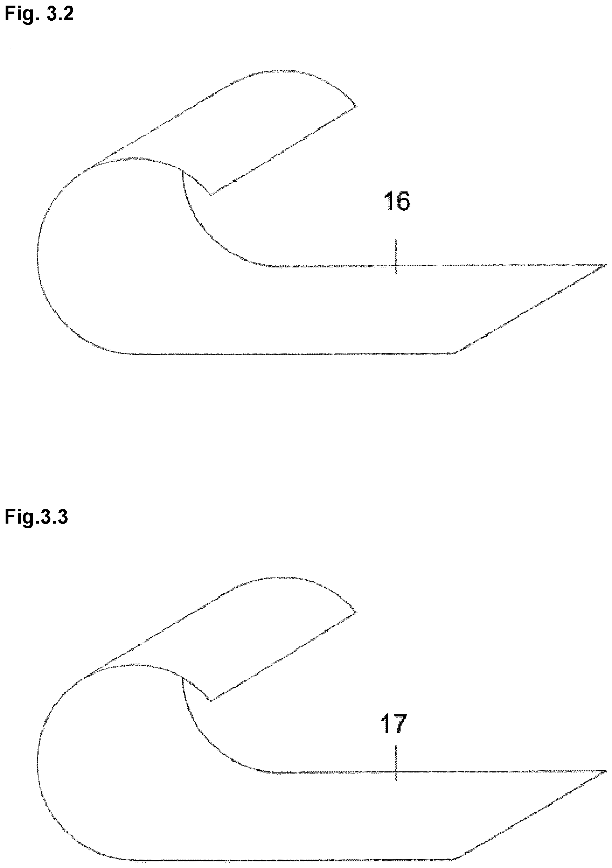

- **Fig. 3.2**: **PP-Gewebe** PP-Filtrationsgewebe Satin Kurzbezeichnung: PP-F-Gewebe Reibschutz, wasserdurchlässig bei und nach Wasserkontakt, Speicherung von SAP-Polymergel.
- **Fig. 3.3**: **PES/BW-Gewebe** Vorzugsweise 65% PES / 35% BW-Gewebe Polyester-Baumwollgemisch, Gewebe wasserdurchlässig mit SAP-PolymergelSperrschicht (Kurzbezeichnung Gewebe: PES/BW-Gewebe).

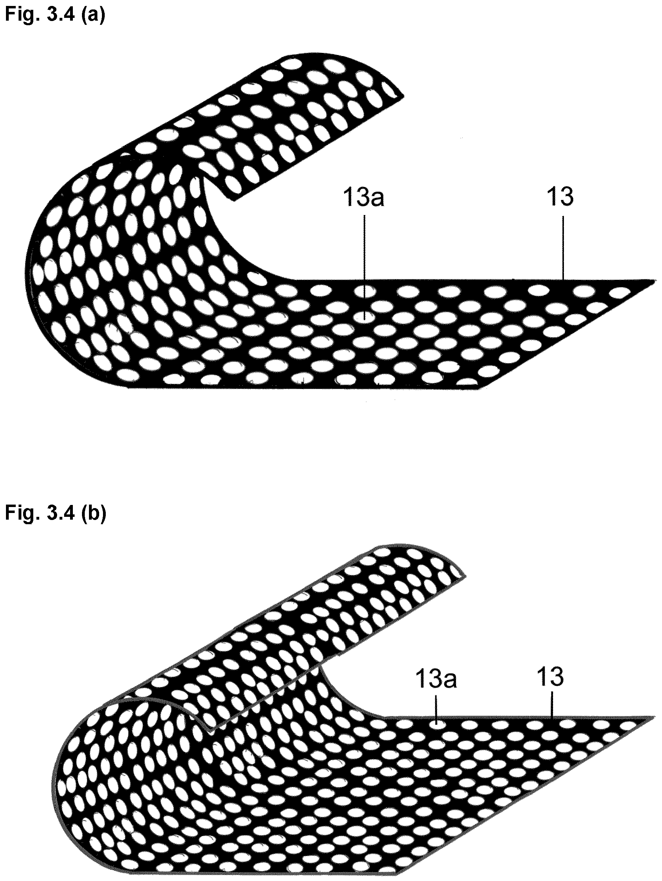

- **Fig. 3.4**: **RPL-Gewirke** 3D-AB-RPL-Abstandsgewirke, Reibschutz-Polymergel-Lochband (Kurzbezeichnung RPL-Gewirke) mit vorzugsweise sehr großen Polymergel-Austrittsöffnungen.

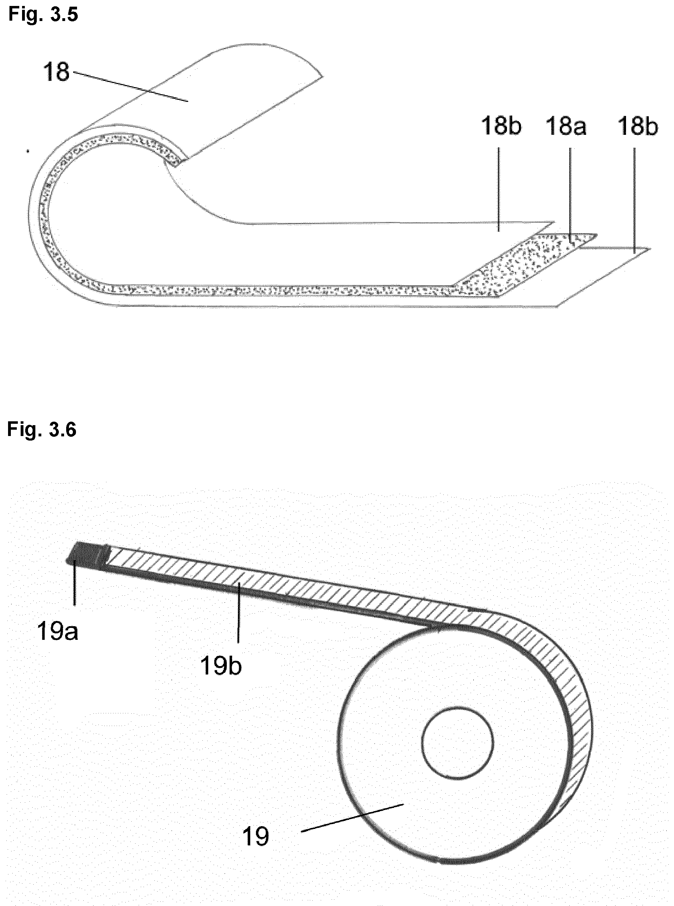

- **Fig. 3.5**: **SAP-Vlies** Superabsorbierendes Polymerpulver mit Korrosionsinhibitor und Klebstoff, beidseitig abgedeckt mit PES-Vlies. Substrat mit hohem Feuchtigkeitsaufnahmevermögen und stark quellend (SQ) vorzugsweise bis 15 mm Höhe.
- **Fig. 3.6**: **K-B/F Klebeband oder Nähfaden**

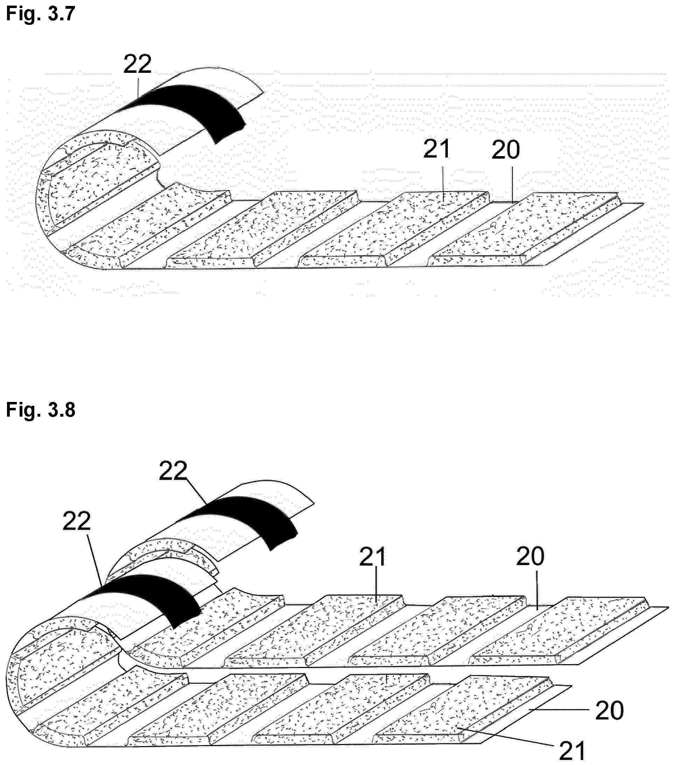

- **Fig. 3.7**: **(PK-I) K50-1** PVA-SAP-K50-1 selbstinjizierende Pulverkettenglieder (SI), aufweisend: superabsorbierendes Polymerpulver (SAP) Kurzbezeichnung (PK-I K50-1), einseitig selbstklebend, mit sehr hohem Feuchtigkeits- und Wasseraufnahmevermögen und Quellung bis über das 10 000-fache Volumen.
- **Fig. 3.8**: **(PK-I) K50/2** zwei parallel angeordnete PVA-SAP-K50-1 (PK-I K50-2).

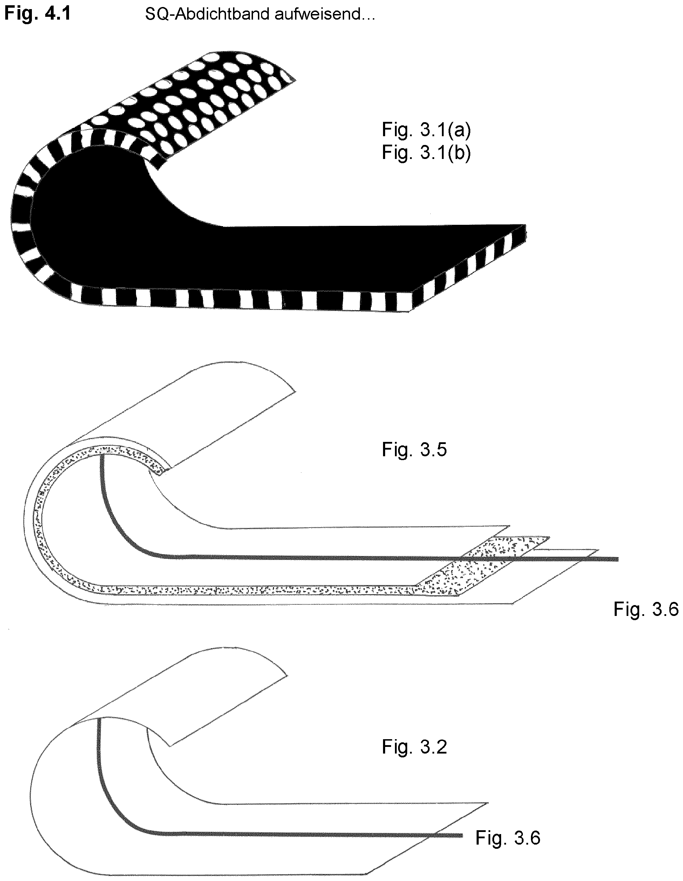

- **Fig. 4.1 bis 4.3**: **Perspektivische Ansichten des Laminieraufbaus von selbstinjizierendem (SI) SAP-Vlies, partiell in definierten Abständen verklebt in Ausgestaltung als saugendes und stark quellendes (SQ) Abdichtband mit Polymergel-Sperrschicht, bestehend aus:**
- **Fig. 4.1**: **SQ-GdPss** - **saugendes und stark quellendes Polymergel-Speicher-Gewirkedichtband, bestehend aus den Bestandteilen von 4 Figuren** Fig. 3.1(a) vorzugsweise **3,55 mm Dicke und** Fig. 3.1 (b) vorzugsweise **6,5 mm Dicke**
Fig. 3.1(a) 3D-AB Gewirke, vorzugsweise Dicke 2,5 mm
Fig. 3.1(b) 3D-AB Gewirke, vorzugsweise Dicke 5,0 mm vorzugsweise kaschiert, mit Polymergel-Sperrschicht außen
Fig. 3.5 SAP-Vlies, vorzugsweise Quellung V = bis 175%
Fig. 3.6 K-B/F Band- oder Faden zur Verklebung in definierten Abständen
Fig. 3.2 PP-F Gewebe, **steif reißfest**
Fig. 3.6 K-B/F Band- oder Faden zur Verklebung in definierten Abständen.

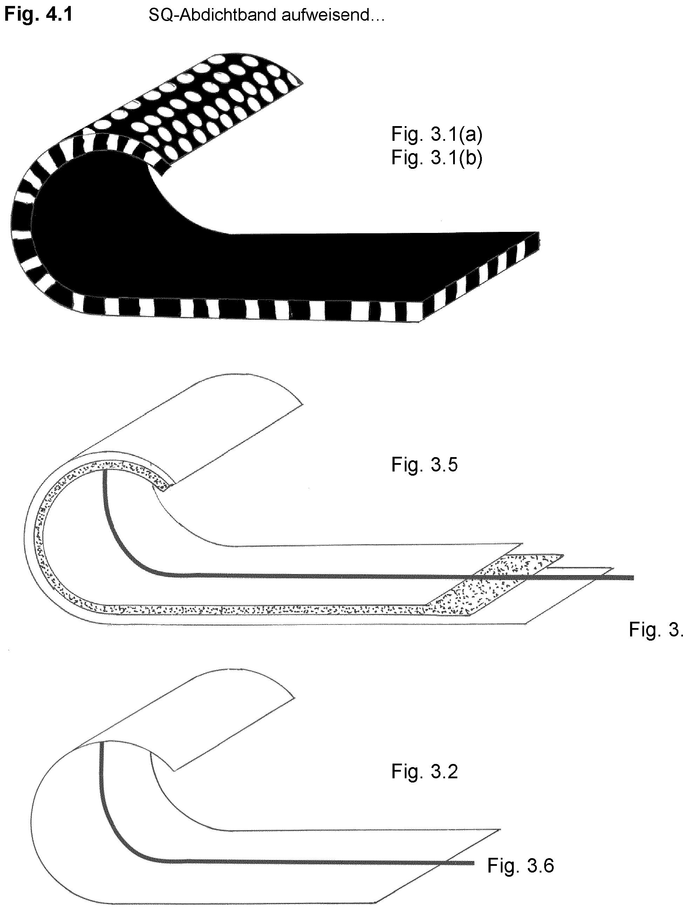

- **Fig. 4.2**: **SQ-GdPsf** - **saugendes und stark quellendes Polymergel-Speicher-Gewirkedichtband, bestehend aus den Bestandteilen von** Figuren Fig. 3.1(a) **3****,****5** mm Dicke und Fig. 3.1 (b) 6,0 mm Dicke
Fig. 3.1(a) 3D-AB Gewirke, vorzugsweise Dicke 2,5 mm
Fig. 3.1(b) 3D-AB Gewirke, vorzugsweise Dicke 5,0 mm kaschiert, Polymergel-Sperrschicht außen
Fig. 3.5 SAP-Vlies, vorzugsweise Quellung V = bis 175%
Fig. 3.6 K-B/F Band- oder Faden zur Verklebung in definierten Abständen
Fig. 3.3 PES/BW Gewebe, **flexibel**
Fig. 3.6 K-B/F Band- oder Faden zur Verklebung in definierten Abständen

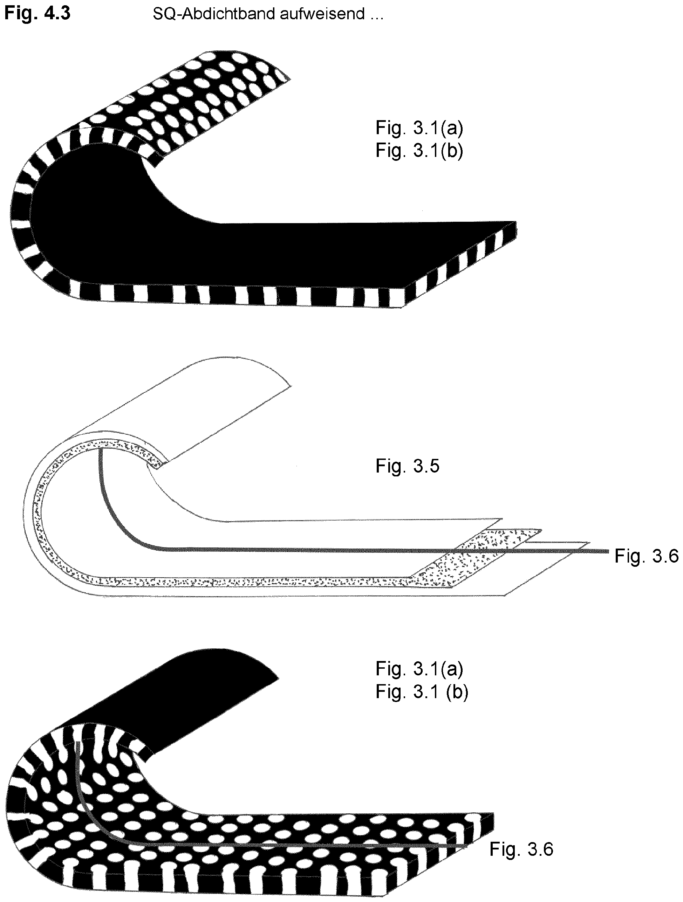

- **Fig. 4.3**: **SQ-GdPsf** - **saugendes und stark quellendes Polymergel-Speicher-Gewirkedichtband, bestehend aus den Bestandteilen von 4 Figuren** Fig. 3.1(a) 5,65 mm Dicke und Fig. 3.1(b)vorzugsweise **10,65 mm Dicke**
Fig. 3.1(a)3D-AB Gewirke, vorzugsweise Dicke 2,5 mm
Fig. 3.1(b) 3D-AB Gewirke, vorzugsweise Dicke 5,0 mm kaschiert, Polymergel-Sperrschicht außen
Fig. 3.5 SAP-Vlies, vorzugsweise Quellung V = bis 175%
Fig. 3.6 K-B/F Band- oder Faden zur Verklebung in definierten Abständen
Fig. 3.1(a)3D-AB Gewirke, vorzugsweise Dicke 2,5 mm
Fig. 3.1(b)3D-AB Gewirke, vorzugsweise Dicke 5,0 mm kaschiert, Polymergel-Sperrschicht außen
Fig. 3.6 K-B/F Band- oder Faden zur Verklebung in definierten Abständen

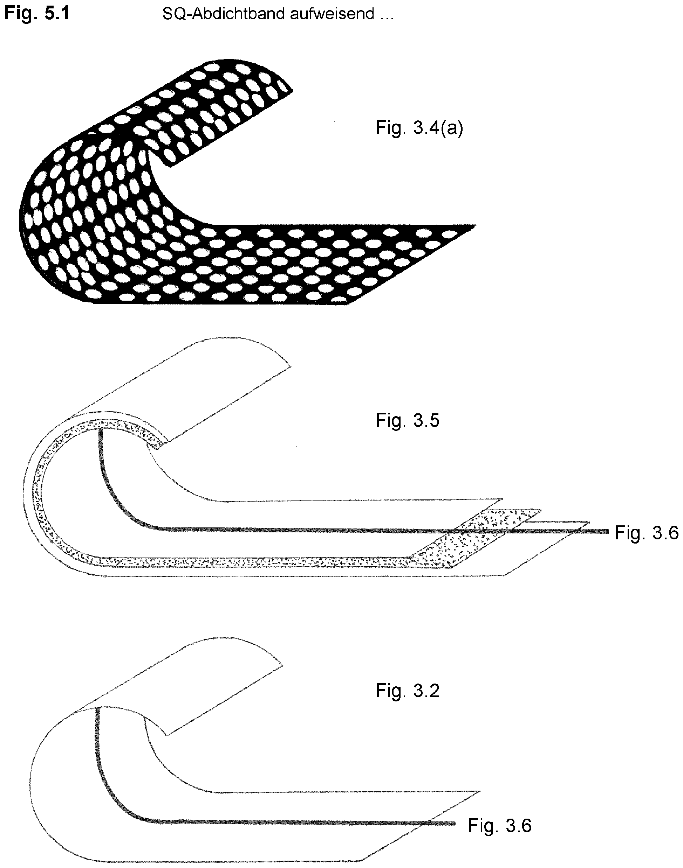

- **Fig. 5.1 bis 5.3**: **Perspektivische Ansichten des Laminieraufbaus von selbstinjizierendem (SI) SAP-Vlies, partiell in definierten Abständen verklebt in Ausgestaltung als saugendes und stark quellendes (SQ) Abdichtband mit Polymergel-Sperr- und** / **oder Verteilungsschicht bestehend aus:**

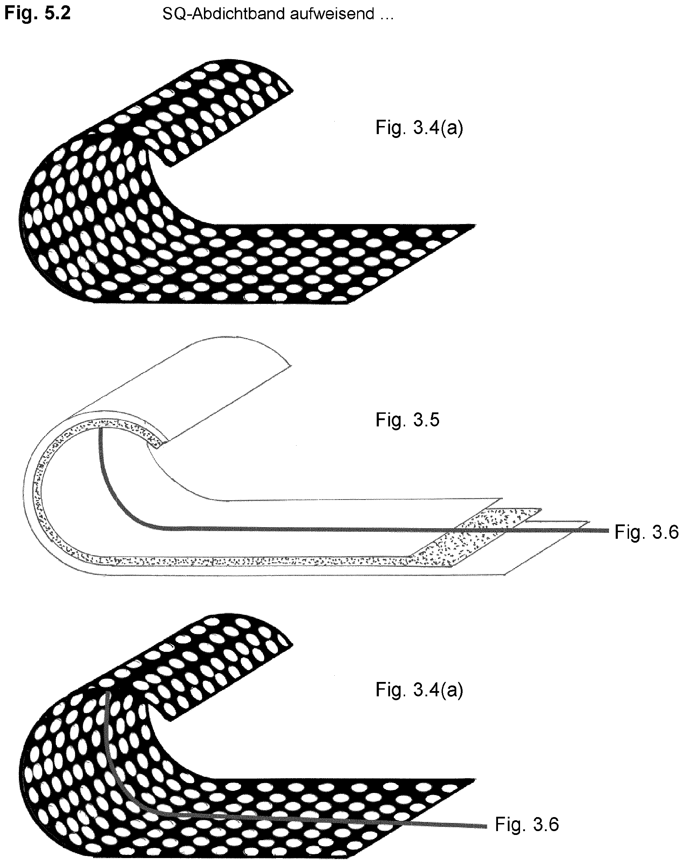

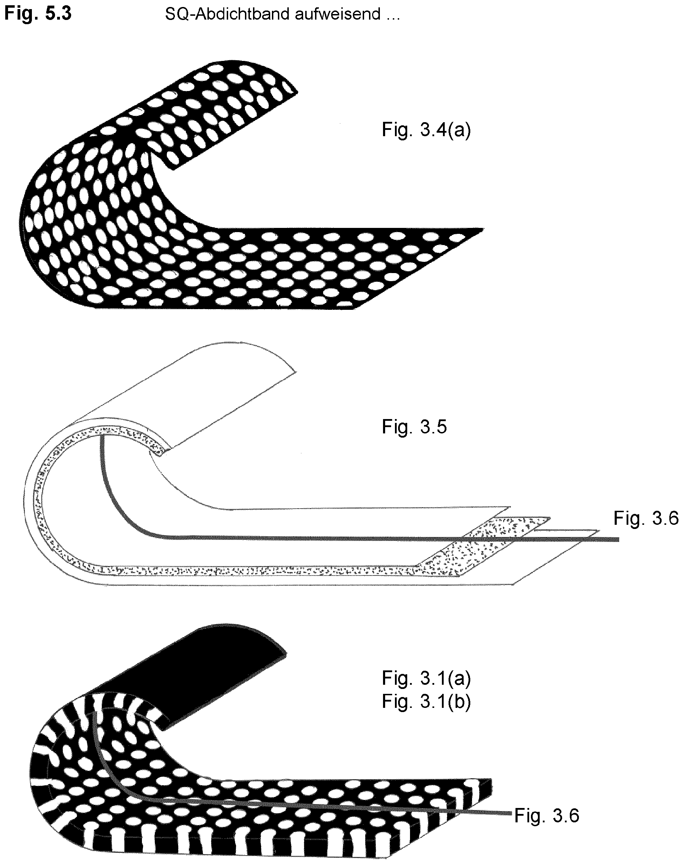

- **Fig. 5.1**: **SQ-Gd-RPLe einseitig saugendes und stark quellendes Polymergel-Verteilungs-Gewirkedichtband, bestehend aus Bestandteilen von 4 Figuren** **Fig. 5****.****1****:** **5****,****1** **mm Dicke**
Fig.3.4(a)RPL-Gewirke, vorzugsweise Dicke 0,8 mm (Polymergel-Verteilung vorzugsweise 45 mm²/100 mm²) nach außen
Fig. 3.5 SAP-Vlies, vorzugsweise Quellung V = 175%
Fig. 3.6 K-B/F Band- oder Faden zur Verklebung in definierten Abständen
Fig. 3.2 PP-F Gewebe, steif reißfest
Fig. 3.6 K-B/F Band- oder Faden zur Verklebung in definierten Abständen.
- **Fig. 5.2**: **SQ-Gd-RPLb** - **beidseitig saugendes und stark quellendes Polymergel-Verteilungs-Gewirkedichtband, bestehend aus Bestandteilen von 4 Figuren**
Fig. 3.4(a)RPL-Gewirke, vorzugsweise Dicke 0,8 mm (Polymergel-Verteilung vorzugsweise 45 mm²/100 mm²) nach außen
Fig. 3.5 SAP-Vlies, vorzugsweise Quellung V = 175%
Fig. 3.6 K-B/F Band- oder Faden zur Verklebung in definierten Abständen
Fig. 3.4(a) RPL-Gewirke, vorzugsweise Dicke 0,8 mm (Polymergel-Verteilung 45 mm²/100 mm²) nach außen
Fig. 3.6 K-B/F Band- oder Faden zur Verklebung in definierten Abständen
- **Fig. 5.3**: **SQ-Gd-RPLb** - **einseitig saugendes und stark quellendes Polymergel- Verteilungs- und einseitig Polymergel-Speicher-Gewirkedichtband, bestehend aus Bestandteilen von 4 Figuren** Fig. 3.1(a) vorzugsweise **4,1 mm Dicke und** Fig. 3.1(b) vorzugsweise **~6,6 mm Dicke**
Fig. 3.4 (a) RPL-Gewirke, vorzugsweise Dicke 0,8 mm (Polymergel-Verteilung vorzugsweise 45 mm²/100 mm²) nach außen
Fig. 3.5 SAP-Vlies, vorzugsweise Quellung V = 175%
Fig. 3.6 K-B/F Band- oder Faden zur Verklebung in definierten Abständen
Fig. 3.1(a) 3D-AB-Gewirke, vorzugsweise Dicke 2,5 mm
Fig. 3.1(b) 3D-AB-Gewirke, vorzugsweise Dicke 5,0 mm kaschiert, Polymergel-Sperrschicht außen
Fig. 3.6 K-B/F Band- oder Faden zur Verklebung in definierten Abständen.

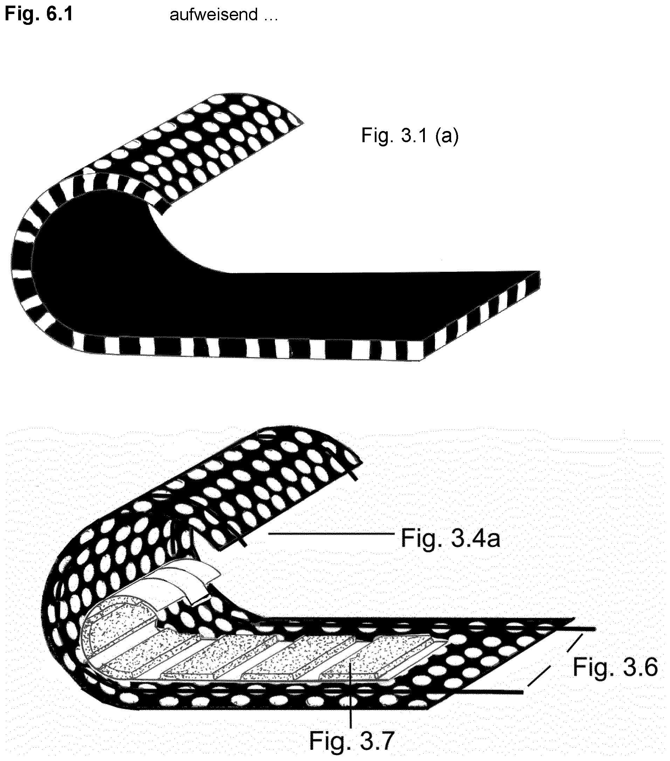

- **Fig. 6.1 bis 6.3**: **Perspektivische Ansichten des zweiten neuen (PK-I) Laminieraufbaus, hergestellt mit einem Formschuh zur Verbindung von selbstinjizierenden (SI) superabsorbierenden Polymer (SAP) PVA-SAP-Quellpulverketten (PK-I) der Patentanmeldung mit Geweben und Gewirken**
- **Fig. 6.1**: **(SI-FF) (PK-I) K50-1 Kaltwasserauflösende Quellpulverkette (PK-I) mit stark quellender Polmergel-Verteilung nach außen zur Speicherung im 3D-AB-Gewirke, in Fugenflanken-Ausbruchsstellen, bestehend aus Bestandteilen von 4 Figuren, Dicke** vorzugsweise ~ **6,55 mm, Breite** vorzugsweise **135 mm**
Fig. 3.2 PP-F Gewebe, steif reißfest
Fig. 3.4(a) RPL-Gewirke, vorzugsweise Dicke 0,8 mm (Polymergel-Verteilung vorzugsweise 45 mm³/100 mm² nach außen
Fig. 3.7 PVA-SAP-K50-1 eine selbstklebende, wasserauflösende SAP-Pulverkette
Fig. 3.6 K-B/F Band- oder Faden zur Verklebung in definierten Abständen

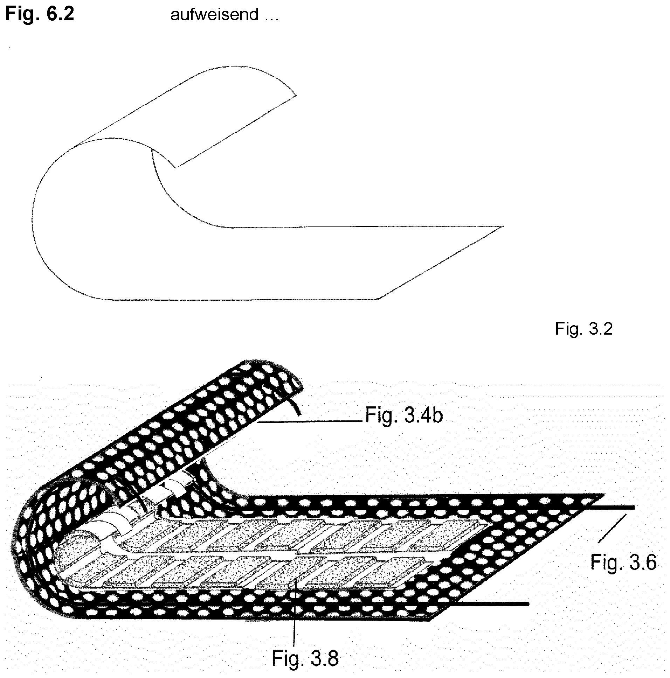

- **Fig. 6.2**: **(SI-FF) (PK-I) K50-2 Kaltwasserauflösende Quellpulverketten (PK-I) mit stark quellender Polymergel-Verteilung nach außen, in Fugenflanken-Ausbruchsstellen, bestehend aus Bestandteilen von 4 Figuren, Dicke** vorzugsweise ~ **6,55 mm,** vorzugsweise **Breite 135 mm**
Fig. 3.2 PP-F Gewebe, steif reißfest
Fig. 3.4(a) RPL-Gewirke, vorzugsweise Dicke 0,8 mm (Polymergel-Verteilung vorzugsweise 45 mm³/100 mm² nach außen
Fig. 3.7 PVA-SAP-K50-2 zwei Stück selbstklebende, wasserauflösende SAP-Pulverketten
Fig. 3.6 K-B/F Band- oder Faden zur Verklebung in definierten Abständen.

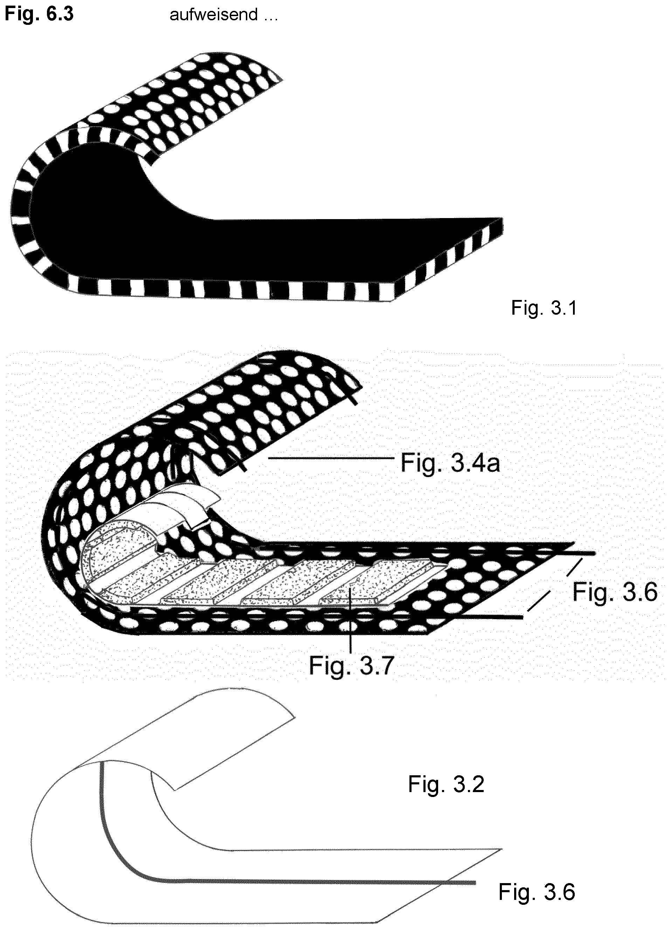

- **Fig. 6.3**: **(SI-FF) (PK-I) K50-1 Kaltwasserauflösende Quellpulverkette (PK-I) mit stark quellender Polymergel-Verteilung nach außen zur Speicherung im 3D-AB-Gewirke, in Fugenflanken-Ausbruchsstellen, bestehend aus Bestandteilen von 4 Figuren Dicke** vorzugsweise ~ **6,55 mm, Breite** vorzugsweise 135 **mm**
Fig. 3.1(a) 3D-AB Gewirke, vorzugsweise Dicke 2,5 mm
Fig. 3.1(b)3D-AB Gewirke, vorzugsweise Dicke 5,0 mm kaschiert, Polymergel-Sperrschicht außen
Fig. 3.4(a) RPL-Gewirke, vorzugsweise Dicke 0,8 mm (Polymergel-Verteilung vorzugsweise 45 mm³/100 mm² nach außen
Fig. 3.7 PVA-SAP-K50-2 zwei Stück selbstklebende, wasserauflösende SAP-Pulverketten
Fig. 3.6 K-B/F Band- oder Faden zur Verklebung in definierten Abständen
Fig. 3.2 PP-F- Gewebe
Fig. 3.6 K-B/F Band- oder Faden zur Verklebung in definierten Abständen

Alle möglichen Einsatzbereiche der Erfindung sind gezeigt in:

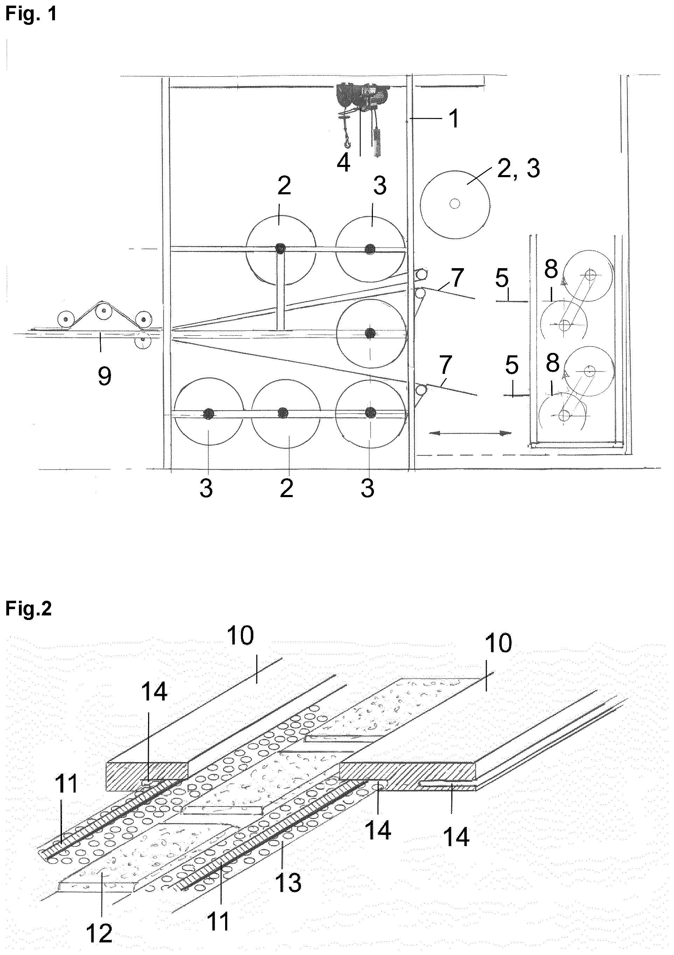

- Fig. 1: Zeigt eine Abstands-Laminier- und/oder -Nähvorrichtung (AL)(AN) zur Herstellung von selbst-injizierendem (SI) Abdichtband, zur mehrschichtigen Klebebandbeschichtung oder Nähfadenverbindung, für die Anwendungsbereiche Kabeldurchführungs- und Fugenkammer-Abdichtungen oder als Feuchtesauger, Wasserspeicher oder landwirtschaftliches Bodenverbesserungsmittel. Ansicht der Laminiermaschine (1), bestehend aus einer Aufnahme (2) von Gewebe- und Vliesband-Rollen vorzugsweise in Lieferbreiten von 160 cm, Rollen-Winkeldurchmesser vorzugsweise kleiner 50 cm und Gewichtsbelastung bis vorzugsweise zu 100 kg pro Rolle (3), die vorzugsweise mit einem Seilzug (4) in die vorgesehene Position gebracht werden. Die Laminierung der Gewebe-, Gewirke und Vlies - Rollen (3) in definierten Abständen von beispielsweise 5 cm bis 160 cm, erfolgt über eine fahrbare Führungsvorrichtung zur Aufnahme von vorzugsweise bis zu 33 Stück Spulen Klebeband oder -fäden für eine erste Laminierschicht (6) und vorzugsweise bis zu 33 Stück Spulen für eine zweite Laminierschicht (7). Die Klebebänder oder -fäden werden definiert bis zur Gewebe- oder Vlies- etc. Auflagestelle geführt. Die Verklebung der Fäden oder Bänder (9) erfolgt nach Auflage auf die vorzugsweise 160 cm breiten Gewebe-, Gewirke- oder Vlies-Bahnen. Die Nähverbindung erfolgt vorzugsweise nach Zusammenführung der Gewebe-, Gewirke- oder Vliesbahnen.
- Fig. 2: Zeigt eine perspektivische Ansicht des Formschuhs (10) zum Einbau in die Laminiervorrichtung der Fig. 1 zur Herstellung von (SI-FF) selbstinjizierenden Fugenflanken-Abdichtungsbändern mit (PVA-SAP-K50) Pulverstickketten für den Anwendungsbereich von Fugenabdichtungen in Tunneln, Brücken und Gewerken. Basis sind vorzugsweise Gewebe, Gewirke- und Vlies-Rollen der Fig. 1. Die vorzugsweise zugfesten und schrumpffreien Bänder (13, (alt. 16)) geschnitten in Lieferbreiten von beispielsweise 13 cm oder 25 cm und Längen bis über 40 m, befinden sich in der Vorrichtung ähnlich der Fig. 1. Die selbstklebende superabsorbierende-Polymer-Pulverstickkette (PVA-SAP-K50) (12) befindet sich im Bereich der Führungsvorrichtung (14) für Klebeband oder -faden. Vorzugsweise ist vorgesehen, die PVA-SAP-K50 Kettenglieder (12) mittig auf dem vorzugsweise 13,5 cm breiten oder vorzugsweise 2 Stück PVA-SAP-K50 auf dem vorzugsweise 25 cm breiten vorzugsweise wasserdurchlässigen PP-Gewebe (16) anzukleben, sowie im Abstand von vorzugsweise 10 cm oder 20 cm, die Klebebänder oder -fäden (11) und vorzugsweise darüber das RPL-Reibschutz-Polymerlochband (13) und/oder eine 3D-AB Gewirke, vorzugsweise mit 2,5 mm oder 5,0 mm, im Formschuh (14) so zu fixieren, dass nach Abziehen der Klebeschutzfolie vom Klebeband und Auflage von Gewirke- oder Vliesband eine partielle Verbindung der Schichten miteinander erfolgt, ohne dass eine Druckbelastung oder Hitzeeinwirkung auf das PVA-SAP-K50 Kettenglied (12) erforderlich ist.
- Fig. 3.1(a): 3D-AB-Gewirke 2,5 mm Eine perspektivische Ansicht des 3D-AB-Gewirkes, vorzugsweise bestehend aus 100% Polyesterabstands-Gewirke (15) Dicke vorzugsweise ca. 2,5 mm (15c) vorzugsweise einseitig außen kaschiert (15b). Die Innenseite (15a) ist offenporig zur Aufnahme und/oder Speicherung von superabsorbierendem Polymergel nach Feuchtigkeits-/ Wasseraufnahme und/oder Speicherung. Die Außenseite (15b) ist wasserdurch- aber undurchlässig für Polymergel (Sperrschicht) vorzugsweise bis zu 50 mm Höhe.
- Fig. 3.1(b): 3D-AB-Gewirke 5,0 mm zeigt eine gleiche perspektivische Ansicht der Figur 3.1(a) vorzugsweise mit einer Dicke von 5 mm (15c), mit dem Vorteil einer hohen Polymergel-Speicherung bis vorzugsweise etwa 50 mm Höhe als Wasserspeicher und zur Abdichtung von großen Löchern, Rissen, Spalten oder als Bodenverbesserungsmittel.
- Fig. 3.2: PP-F-Gewebe Eine perspektivische Ansicht des PP-F- Gewebes vorzugsweise bestehend aus 100% Polypropylen Filtrationsgewebe (16) mit einer hohen Reißfestigkeit vorzugsweise nach EN ISO 13934 Kette; 3000 (5 cm)-Monofilament und Schuss 2000 (5 cm) Monofilamente, vorzugsweise sehr geringe Schrumpfung auch als Reibschutz-Polymergel-Sperrschicht (RPS-Band) verwendbar.
- Fig.3.3(a): PES/BW-Gewebe zeigt eine perspektivische Ansicht einer Weiterentwicklung des schrumpffreien wasserdurchlässigen (65% Polyester und 35% Baumwoll) Bandes (1) als Polymer-Sperrschicht.
- Fig. 3.3(b): PES/BW-Gewebe zeigt eine gleichwertig perspektivische Ansicht zur Fig. 3.3 (a) für Anwendungen mit Fig. 3.8 vorzugsweise in Schnittbreiten 270 mm als Auflage für PVA-SAP-K50/2 selbstinjizierende (SI) Pulverkettenglieder.
- Fig. 3.4: RPL-Gewirke (Lochband) Eine perspektivische Ansicht des RPL-Gewirkes vorzugsweise aufweisend 100% PES-Polyester 3D-Abstandsgewirke (13) mit Polymergel-Austrittsöffnungen von vorzugsweise 0,45 cm²/ 1 cm² (13a) und vorzugsweise einer hohen Steifigkeit als Reibschutz bei Montagen von selbstinjizierenden Fugenflanken (SI-FF) Abdichtungen.
- Fig. 3.5: PES-SAP-Vlies zeigt eine perspektivische Ansicht des PES-SAP-Vlieses (Kurzbezeichnung SAP-Vlies) aufweisend superabsorbierendes Polymerpulver mit Korrosions-Inhibitor und Klebstoff (18a), einseitig oder vorzugsweise beidseitig abgedeckt mit wasserdurchlässiger PES-Polyesterfolie (18b) mit den besonderen Vorteilen eines Quellverhaltens in Höhe bis vorzugsweise 15,7 mm. In Kombination mit Fig. 3.1 und Fig. 3.3 sind mit der Erfindung universelle Anwendungsmöglichkeiten als Feuchtesauger, Wasserspeicher, landwirtschaftliches Bodenverbesserungsmittel, Kabeldurchführungs- und Fugenkammer-/ Fugenflanken-Abdichtungen möglich.
- Fig. 3.6: (K-B/ NF) Klebeband oder Nähfaden zeigt die Ausführung eines beidseitig selbstklebenden Klebebandes K-B (19) und Nähfadens (NF), aufweisend eine stark haftende Klebeschicht aus vorzugsweise permanent haftendem Kunstharzkleber (19a) und Abdeckpapier (19b) und wasser- und reißfestem Nähfaden (NF).
- Fig. 3.7: (PK-I 50/1) Pulverkettenglied
- Fig. 3.8: (PK-I 50/2) Pulverkettenglied zeigen eine perspektivische Ansicht eines superabsorbierenden Polymer-Pulverketten-Systems (PVA-SAP-K50/1). Die selbstinjizierende SAP-Quellpulverkette weist eine Polyvinylalkohol (PVA) kaltwasserauflösenden Folie (20) auf, in der das superabsorbierende Polymerpulver als Kettenglied (21) verpackt ist. Zur Befestigung an einer der Kunststoffbahnen, Kombination von Fig. 3.7 mit Fig. 3.4(a) und Fig. 3.8 mit Fig. 3.4(b), ist vorzugsweise ein doppelseitig selbstklebendes Band (22) angeordnet. Die abdichtende Funktion kommt zum Tragen, wenn das Endprodukt, welches der Figurengruppe 6.1 bis 6.3 entspricht, an einem Abdichtkissen mit Ventil montiert ist und in einer Fugenkammer von Dehn- und Bewegungsfugen vorzugsweise nach DIN 18195-5, 18195.6 und 18195-8 eingebaut ist und drucklos ablaufendes Wasser oder nicht drückendes Wasser die PVA-Folie (20) auflöst, das pulverförmige SAP (21) bis zum 1000 fachen seines Volumens aufquillt und Injektionslochbohrungen, Betonabplatzungen und Risse abdichtet.
- Fig. 4.1: SQ-Gd Pss zeigt eine perspektivische Ansicht des saugenden und stark quellenden Polymergel-Speicher-Gewirkedichtbands (Gd) aufweisend aus Fig. 3.5 PES-SAP-Vlies und Figur 3.1(a, b) 3D-AB Abstandsgewirke mit einer Polymergel-Sperrschicht (Ps) zur werkseitigen Weiterverarbeitung in anwendungsspezifische Abdichtbandbreiten für Kabel- und oder Dehn- und Bewegungsfugen-Abdichtungen der Patente 32 56656, 34 526680 (einbezogen durch Verweis). Diese Weiterentwicklung "Abdichtung gegen Wasserfortleitung" erfolgte für den Anwendungsbereich Kabelschutzrohr-/ Kabeldurchführungsabdichtung zum Zweck, dass höhere Wasserdruckbeständigkeiten und Dichtigkeit gegen schleichende Gase sowie weitere kundenspezifische Anforderungen wie Feuchtesauger-, Wasserspeicher-, Bodenverbesserungsmittel ermöglicht werden können. Der wesentliche Vorteil der Erfindung ist, dass eine hohe Polymergel-Sperrschicht (Pss), Steife und Reißfestigkeit der Fig. 3.2 besteht und dadurch zur Abdichtung von mehrfach mit Kabeln belegten Rohren, Zwischenräume und Spalten ermöglicht wird.
- Fig. 4.2: SQ-GdPsf zeigt eine ähnliche perspektivische Ansicht eines Polymergel-Speicher-Gewirkedichtbands (Gd) der Fig. 4.1, wo alternativ zum steifen, reißfesten PP-F Gewebeband der Fig. 3.2 ein flexibles PES-/ BW-Gewebeband der Fig. 3.3 angeordnet ist. Mit diesem vorzugsweise 3,3 mm oder vorzugsweise 6,0 mm dicken SQ-Abdichtband wird die Abdichtung von kleinen Zwischenräumen und Spalten gegen Feuchtigkeit und Wasserdurchdringung von Überdeckungen, Schutzrohren oder Mauerdurchführungen ermöglicht. Eine Weiterentwicklung für eine besonders wirtschaftliche Lösung gegen Wasserdurchdringung und Polymergel-Speicherung wird durch übereinanderlegen von beispielsweise zwei Bändern der Fig. 4.2 und Verbindung dieser mittels Klebebandverklebung oder Vernähung (Fig. 3.6) in, vorzugsweise definierten Abständen zu Abdichtbändern in Dicken von vorzugsweise 7 mm oder 12 mm und vorzugsweise Vierkammer-Abdichtsternsystem erzielt.
- Fig. 4.3: SQ-GdPsf zeigt eine ähnliche perspektivische Ansicht der Fig. 4.2 als optimierte Version mit sehr hoher Polymergel- und Wasser-Speicherung nach Wassereintritt, in der Ausgestaltung, dass an Stelle des in Fig. 4.2 angeordneten PES/ BW-Gewebes der Fig. 3.3 ein 3D-AB-Gewirke, Dicke 2,5 mm oder 5,0 mm der Fig. 3.1 (a, b) mit der offenen Seite zum SAP-Vlies (Polymergel nach Wasserkontakt) der Fig. 3.5 zeigend, angeordnet ist. Fig. 4.3 kann entsprechend Fig. 4.2 durch übereinanderlegen von zwei Bändern der Fig. 4.3 und Verbindung dieser in definierten Abständen mittels Klebeband oder vernäht (Fig. 3.6) zu elastischen ca. 10 mm bis 20 mm dicken Abdichtbändern oder Vierkammer-Abdichtsternen zusammengefügt werden.
- Fig. 5.1: zeigt eine ähnliche perspektivische Ansicht eines Polymergel-Speicher-Gewirkedichtbands (Gd), dass auf Grund seiner hohen Quellpolymer-Verteilungseigenschaft für ein breites Anwendungsspektrum geeignet ist. Für den Anwendungsbereich Abdichtung von Fugenkammern (FK) oder Fugenflanken (FF) befindet sich vorzugsweise ein RPL-Gewirke Fig. 3.4 als Montage-Reibschutz gegenüber Betonoberflächen auf der Außenseite des Gewirkedichtbands, mit der Eigenschaft, eine vorzugsweise hohe Polymergel-Verteilung durch Löcher vorzugsweise Ø 0,8 mm mit einer Verteilfläche von vorzugsweise 0,45 cm²/1 cm² zur Abdichtung von Kiesnestern und Rissen, zu ermöglichen.
- Fig. 5.2: zeigt eine ähnliche perspektivische Ansicht der Fig. 5.1, beide Außenseiten des Polymergel-Speicher-Gewirkedichtbands (Gd) aufweisend RPL-Gewirke Fig. 3.4 als Reibschutz gegenüber Betonoberflächen und einer vorzugsweise sehr hohen Polymergel-Verteilung durch Löcher vorzugsweise Ø 0,8 mm im Gewirke mit einer Verteilfläche von vorzugsweise 0,45 cm²/1 cm² zur universellen Abdichtung u.a. als Wasserschutz und Feuchtesauger bei Altbausanierung, Terrassen und Gartenhäusern.
- Fig. 5.3: zeigt eine ähnliche perspektivische Ansicht der Fig. 4.3 als Wasserspeicher zum Erhöhen und dauerhaftem Nutzen der Wasserkapazität von Boden und Substanzen. Bei Anwendung des 3D-AB-Gewirkes Fig. 3.1 (a, b) zur Überdeckung des superabsorbierenden Polymerbandes Fig. 3.5 ist nach Wassereintritt eine Polymergel-Wasserspeicherung im offenporigen Teil des 3D-AB-Gewirkes möglich.
- Fig. 6.1, 6.2 und 6.3: zeigen perspektivisch, die mittels zweitem, neuen Formschuh-Laminier-verfahren und -Vorrichtung der Fig. 2 miteinander zu verklebenden Schichten basierend auf den Pulverketten-Injektions- (PK-I) Fugenflanken (FF) Abdichtsystemen Fig. 3.7 und Fig. 3.8.
- Fig. 6.1: zeigt eine perspektivische Ansicht der Grundbauteile RPL-Gewirke Fig.3.4 (a) Reibschutz-Polymergel-Lochband, deckungsgleich übereinandergelegt mit selbstinjizierenden Polymerpulver (SAP) -Kettenglieder PK-I K50-1 der Fig. 3.7 und ein Fig. 3.1 (a, b) 3D-AB-Gewirke verklebt oder vernäht, vorzugsweise mittels K-B Klebeband oder Nähfaden (NF) der Fig.3.6.
- Fig. 6.2: zeigt eine ähnlich perspektivische Ansicht der Fig. 6.1 mit zwei Pulverkettengliedern der Fig. 3.8, verklebt mit Fig. 3.2 PP-Gewebe als Polymergel-Sperrschicht.
- Fig. 6.3: zeigt eine ähnlich perspektivische Ansicht der Fig. 6.1, verklebt mit Fig.3.1 3D-AB-Abstandsgewirke als Polymergel-Sperrschicht.

Alle angeführten DIN-Normen beziehen sich auf die am Anmeldetag der vorliegenden Patentanmeldung gültige Fassung der jeweiligen Norm.

Das Quellpolymer/Polymergel/superabsorbierendes Polymer(band)/ selbstinjizierenden Polymerpulver/ Quellpulverketten(material) können synonym verwendet sein und beispielsweise Polyacrylamid, Polyvinylpyrrolidon, Amylopektin, Gelatine, Cellulose oder eine Mischung davon aufweisen.

Vorzugsweise ist die Abstands-Nähvorrichtung zum definierten Vernähen in Abständen von 5 cm bis 160 cm von zusammengeführten mehrschichtigen Gewirkedichtbändern im losen oder verklebten Zustand in Längsrichtung über Längen von 40 m und bei Verwendung als Wasserspeicher ausgebildet, dabei kann zusätzlich in Querrichtung ein Quellpolymerspeicher im Abstand von 10 cm bis über 24 m vorgesehen sein, dass durch den Polymerpressdruck keine Nähte aufplatzen und Polymer austritt.

Weitere Einzelheiten zur Erfindung sind in dem Gebrauchsmuster DE 20 2021 102 407 beschrieben, dessen Inhalt hiermit durch Verweis vollständig als Teil der Offenbarung der vorliegenden Erfindung aufgenommen und als Anlage der Patentanmeldung beigefügt ist.

**Bezugszeichenliste**

| | **Nr.** | **Nummernliste** |
|---|---|---|
| **Fig**. **1** | | **AB-Gewirke-/ SAP-Vlies Laminiervorrichtung** |
| | 1 | Laminiervorrichtung |
| | 2 | AB-Gewebe |
| | 3 | AB-Gewebe-Vlies Rollen |
| | 4 | Seilzug |
| | 5 | Führungsvorrichtung für Klebeband oder -faden zur Auflage auf Vlies oder Gewebe |
| | 6 | 1. Laminierschicht mit nur 33 Klebebändern |
| | 7 | 2. Laminierschicht mit nur 33 Klebebändern |
| | 8 | Lochblechführung für Klebeband / -faden |
| | 9 | Lochblech-Kühlung |
| **Fig. 2** | | **RPL-PVA-SAP-K50 Formschuh-Laminiervorrichtung** |
| | 10 | Laminier-Formschuhvorrichtung |
| | 11 | Klebeband / -faden im Abstand von 100 mm oder 200 mm |
| | 12 | PVA-SAP-K50 Pulverkette (PK-I) auf selbstklebendem Band |
| | 13 | RPL-Gewirke (Reibschutz-Polymer-Lochband) der Fig. 3.4 Alternativabdeckung PP-Gewebe |
| | 14 | Formschuh-Führungsvorrichtung |
| **Fig. 3.1(a)** | | **3D-AB-Abstandsgewirke** |
| | 15 | 100% Polyester-Abstandsgewirke (PES 3D-AB) |
| | 15a | AB-Gewirke einseitig offenporig zur Polymergel-Speicherung |
| | 15b | einseitige Kaschierung außen (Polymergel-Sperrschicht) |
| | 15c | Dicke 3D-AB-Gewirke |
| **Fig. 3****.****2** | | **PP-F Gewebe** |
| | 16 | 100% Polypropylen-Filtrationsgewebe als Reibschutz und Polymergel-Sperrschicht (RPS-Band) |
| **Fig. 3.3** | | **PES-BW Gewebe** |
| | 17 | 65% Polyester und 35% Baumwollgewebe als Polymergel-Sperrschicht |
| **Fig. 3****.****4** | | **RPL-Gewirke** |
| | | Breite 135 mm (Fig. 3.4 (a)) \| Breite 270 mm (Fig. 3.4 (b)) |
| | 13 | 100% Polyester 3D-Abstandsgewirke offenporig, (Lochband) als Reibschutz |
| | 13a | Polymergel-Austrittsöffnungen (Löcher) |
| **Fig. 3****.****5** | | **(PES-) SAP-Vlies** |
| | 18a | Superabsorbierendes Polymer vorzugsweise mit Korrosionsinhibitor (SAP) Polyesterfolie (PES) |
| | 18b | |
| **Fig. 3****.****6** | | **K-B Klebebänder** / **Nähfäden (NF)** |
| | 19 | Klebeband |
| | 19a | permanent haftender Kunstharzkleber Abdeckpapier |
| | 19b | |
| Fig. 3.7 | | **PK-I 50-1 Pulverkettenglied (1 Stück)** |
| | 20 | Kaltwasserauflösende Polyvinylalkohol (PVA) Folie Superabsorbierendes Polymer (SAP), verpackt in (PVA)-Folie, Kettenglied doppelseitiges Klebeband |
| | 21 | |
| | 22 | |
| Fig. 3.8 | | **PK-I 50-2 Pulverkettenglied (2 Stück)** |
| | | Zwei Stück PK-I 50-1 Kettenglieder der Fig. 3.7 zur gemeinsamen Verwendung in einem Gewirkedichtband |
| **Fig. 4.1** | | **SQ-Gd Pss bestehend aus** |
| | Fig. 3.1 | 3D-AB 100% PES-Abstandsgewirke mit einer Polymergel Sperrschicht zur Außenseite |
| | Fig. 3.5 | PES-SAP-Vlies mit hoher Polymergelquellung |
| | Fig. 3.6 | K-B Klebeband/ Nähfaden in 5 cm Abständen (Verklebung/- nähung der Schichten) |
| | Fig. 3.2 | PP-F Gewebe reißfest, Polymergel-Sperrschicht |
| | Fig. 3.6 | K-B Klebeband/ Näh-faden in 5 cm Abständen (Verklebung/ - nähung der Schichten) |
| **Fig. 4****.****2** | | **SQ-Gd Psf bestehend aus** |
| | Fig. 3.1 | 3D-AB 100% PES-Abstandsgewirke mit einer Polymergel Sperrschicht zur Außenseite |
| | Fig. 3.5 | PES-SAP-Vlies mit hoher Polymergelquellung K-B Klebeband/ |
| | Fig. 3.6 | Nähfaden in 5 cm Abständen (Verklebung /-nähung der Schichten) |
| | Fig. 3.3 | PES/BW-Gewebe flexibel, Polymergel-Sperrschicht K-B/ Klebe- |
| | Fig. 3.6 | band/ Nähfaden in 5 cm Abständen (Verklebung / -nähung der Schichten) |
| **Fig. 4****.****3** | | **SQ-Gd Psf bestehend aus** |
| | Fig. 3.1 | 3D-AB 100% PES-Abstandsgewirke mit einer PolymergelSperrschicht zur Außenseite |
| | Fig. 3.5 | PES-SAP-Vlies mit hoher Polymergelquellung K-B Klebeband/Nähfaden in 5 cm Abständen (Verklebung / -nähung der Schichten) |
| | Fig. 3.6 | |
| | Fig. 3.1 | PES/BW-Gewebe flexibel, Polymergel-Sperrschicht K-B Klebeband/ Näh-faden in 5 cm Abständen (Verklebung/ -nähung der Schichten) |
| | Fig. 3.6 | |
| **Fig. 5****.****1** | | **SQ-Gd RPLe bestehend aus** |
| | Fig. 3.4 | PES-RPL-Abstandsgewirke mit einer Polymergel-Verteilung zur Außenseite |
| | Fig. 3.5 | PES-SAP-Vlies mit hoher Polymergelquellung K-B Klebeband/ |
| | Fig. 3.6 | Nähfaden in 5 cm Abständen (Verklebung / - nähung der Schichten) |
| | Fig. 3.2 | 3D-AB 100% PES-Abstandsgewirke mit einer Polymergel Sperrschicht zur Außenseite K-B Klebeband/ Nähfaden in 5 cm Abständen (Verklebung / -nähung der Schichten) |
| | Fig. 3.6 | |
| **Fig. 5****.****2** | | **SQ-Gd RPLb bestehend aus** |
| | Fig. 3.4 | PES-RPL-Abstandsgewirke mit einer Polymergel-Verteilung zur Außenseite |
| | Fig. 3.5 | PES-SAP-Vlies mit hoher Polymergelquellung K-B Klebeband/ |
| | Fig. 3.6 | Nähfaden in 5 cm Abständen (Verklebung / -nähung der Schichten) |
| | Fig. 3.4 | PES-RPL-Abstandsgewirke mit einer Polymergel-Verteilung zur Außenseite |
| | Fig. 3.6 | K-B Klebeband/ Nähfaden in 5 cm Abständen (Verklebung /nähung der Schichten) |
| **Fig. 5****.****3** | | **PES-RPLb bestehend aus** |
| | Fig. 3.4 | PES-RPL-Abstandsgewirke mit einer Polymergel-Verteilung zur Außenseite |
| | Fig. 3.5 | PES-SAP-Vlies mit hoher Polymergelquellung K-B Klebeband/ |
| | Fig. 3.6 | Nähfaden in 5 cm Abständen (Verklebung / -vernähung der Schichten) |
| | Fig. 3.4 | PES-RPL-Abstandsgewirke mit einer Polymergel-Verteilung zur |
| | Fig. 3.6 | Außenseite K-B Klebeband/ Nähfaden in 5 cm Abständen (Verklebung / - nähung der Schichten) |
| **Fig. 6****.****1** | | **SI-FF (PK-I) K50/1 bestehend aus** |
| | Fig. 3.1 | 3D-AB 100% PES-Abstandsgewirke mit einer PolymergelSperrschicht zur Außenseite |
| | Fig. 3.4 | PES-RPL-Abstandsgewirke mit einer Polymergel-Verteilung zur Außenseite |
| | Fig. 3.7 | PVA-SAP-K50/1, selbstklebende, kaltwasserlösende SAP-Pulverkette |
| | Fig. 3.6 | K-B Klebeband/ Nähfaden (Verklebung/ -nähung der Schichten) |
| **Fig. 6****.****2** | | **SI-FF (PK-I) K50/2 bestehend aus** |
| | Fig. 3.2 | PP-F Gewebe reißfest, Polymergel-Sperrschicht |
| | Fig. 3.4 | PES-RPL-Abstandsgewirke mit einer Polymergel-Verteilung zur Außenseite |
| | Fig. 3.8 | PVA-SAP-K50/2, selbstklebende, kaltwasserlösende SAP-Pulverkette, zweireihig |
| | Fig. 3.6 | K-B Klebeband/ Nähfaden (Verklebung / -nähung der Schichten) |
| **Fig. 6****.****3** | | **SI-FF (PK-I) K50/1 bestehend aus** |
| | Fig. 3.1 | 3D-AB-Abstandsgewirke, kaschiert. Polymergel-Sperrschicht |
| | Fig. 3.4 | PES-RPL-Abstandsgewirke mit einer Polymergel-Verteilung zur Außenseite |
| | Fig. 3.7 | PVA-SAP-K50/1, selbstklebende, kaltwasserlösende SAP-Pulverkette |
| | Fig. 3.6 | K-B Klebeband/ Nähfaden (Verklebung / -nähung der Schichten) |
| | Fig. 3.2 | PP-F-Gewebe |
| | Fig. 3.6 | K-BF Klebeband/ Näh-faden (Verklebung / -nähung der Schichten) |

**Verwendete Abkürzungen (alphabetisch)**

| | |
|---|---|
| 3D-AB-PES | 3D Polyester-Abstandsewirke, einseitig offenporig, einseitig kaschiert |
| 3D-AB-RPL | 3D Polyester-Lochgewebe (beidseitig offenporig, durchgängig) |
| AL | Abstands - Laminiervorrichtung |
| AN | Abstands - Nähvorrichtung |
| FF | Fugenflanken |
| FK | Fugenkammer |
| Gd | Gewirkedichtband |
| K-B/NF | Klebeband oder Nähfaden |
| Kdf | Kabeldurchführung |
| PES | Polyester |
| PES-(Gewebe) | Polyester-Gewebe |
| PES/BW | Polyester-Baumwoll-Gewebe |
| PES-SAP-Vlies | Superabsorbierendes Polymerpulver mit Korrosionsinhibitor und Klebstoff, beidseitig abgedeckt mit Polyester-Vlies |
| (PK-I) | PVA-SA- Quellpulverketten Injektion |
| PP (PP-F) | Polypropylen- (Filtrations-) Gewebe |
| PP-F | Polypropylen-Filtrationsgewebe, reißfest |
| Ps | Polymergel-Sperrschicht |
| Psf | Polymergel-Sperrschicht, flexibel PES/BW-Gewebeband |
| Pss | Polymergel-Sperrschicht, steif und reißfest aus Polypropylen Filtrationsgewebe (PP-F) |
| PVA-SAP-K50 | Superabsorbierendes Polymerpulver, verpackt in Polyvinylalkohol-Folie (Beutel Länge 50 mm), kettenförmig aneinandergereiht |
| RPL | Reibschutz Polymergel-Verteilschicht (Lochgewebe) |
| RPLb | Reibschutz Polymergel-Verteilschicht, beidseitig |
| RPLe | Reibschutz Polymergel-Verteilschicht, einseitig |

**Verwendete Abkürzungen (alphabetisch)**

| | |
|---|---|
| SAP | Superabsorbierendes Polymer |
| SAP-3D-AB | Gewirkedichtband aus Verbund von superabsorbierendem Polymer und 3D-Abstandsgewirke |
| SI | Selbstinjizierende, superabsorbierende Polymerabdichtung |
| SI | Selbstinjizierende, superabsorbierende Polymerabdichtung |
| SI-FF | Selbstinjizierende Fuqenflankenabdichtunq |
| SK-F | Schmelzklebefaden |
| SQ | Saugend und stark quellend |
| SQ-Gd Psf | Stark quellendes Gewirkedichtband mit Polymergel-Sperrschicht, flexibel |
| SQ-Gd Pss | Stark quellendes Gewirkedichtband mit Polymergel-Sperrschicht, steif |
| SQ-Gd RPLb | Stark quellendes Gewirkedichtband mit Polymergel-Verteilschicht (RPLe Reibschutz-Lochqewebe, beidseitig) |
| SQ-Gd RPLe | Stark quellendes Gewirkedichtband mit Polymergel-Verteilschicht (RPLe Reibschutz-Lochgewebe, einseitig) |

## Patentansprüche

1. Abdichtung für Kabelrohrdurchführungen, Fugenkammern, Spalten, Rissen, Beton- und Steinvliesüberdeckungen gegen Wasserdurchdringung. aufweisend Gewirkedichtbänder mit, vorzugsweise basierend auf, SAP-Vlies, die ein- oder mehrlagig mit, vorzugsweise jeweils, einseitig kaschiertem 3D-AB Abstandsgewirken oder anderen textilen Geweben als Schichten zur Polymergel-Speicherung gebildet sind.

2. Abdichtung nach Anspruch 1
**dadurch gekennzeichnet,**
**dass** bei mehrlagig eingebrachtem SAP-Vlies die Schichten miteinander verklebt und/oder vernäht sind.

3. Abdichtung nach Anspruch 1
**dadurch gekennzeichnet,**
**dass** die SAP-Vlieslagen ausgebildet sind, Wasser und Feuchte reversibel aufzunehmen, wobei das SAP ausgebildet und bereitgestellt ist zumindest im Trockenen Zustand im Dichtband gespeichert zu sein, in einem gequollenen Zustand aus dem SAP-Vlies auszutreten und/oder bereitgestellt ist, verpresst in Spalten, Fugen, Löcher und Risse diese abzudichten.

4. Abdichtung nach Anspruch 1
**dadurch gekennzeichnet,**
**dass** das SAP zwischen 2 Lagen Vlies eingebracht ist oder auf der Oberfläche des Vlieses angeordnet ist.

5. Abdichtung nach Anspruch 4
**dadurch gekennzeichnet,**
**dass** das SAP in einem PVA-Folienschlauch in Form von Pulverketten als Sticks oder auf das Vlies eingebracht, bereitgestellt ist.

6. Abdichtung nach Anspruch 1
**dadurch gekennzeichnet,**
**dass** die Pulverketten segmentartig aufgebaut ist also voneinander SAPstofflich getrennte Aufbewahrungsbereiche aufweist.

7. Abdichtung nach Anspruch 5 oder 6
**dadurch gekennzeichnet,**
**dass** die Pulverketten/Sticks ausgebildet sind, bei Kontakt mit Wasser und/oder Auflösung der PVA-Folie das superabsorbierende Polymer SAP aktiviert wird und /Oder ausgebildet ist einem Quelldruck nachzugeben und das SAP bei einer feuchtigkeitsbedingten Ausdehnung freizugeben.

8. Laminiermaschine (1), zur Herstellug der Abdichtung nach einem der Ansprüche 1 bis 7 aufweisend eine Aufnahme (2) von Gewebe- und Vliesband-Rollen vorzugsweise in Lieferbreiten von 160 cm, Rollen-Winkeldurchmesser vorzugsweise kleiner 50 cm und Gewichtsbelastung bis vorzugsweise zu 100 kg pro Rolle (3), die mit einem Seilzug (4) in eine vorgesehene Position gebracht werden können, eine Laminierung der Gewebe-, Gewirke und Vlies - Rollen (3) in definierten Abständen von beispielsweise 5 cm bis 160 cm, ist über eine fahrbare Führungsvorrichtung zur Aufnahme von vorzugsweise bis zu 33 Stück Spulen Klebeband für eine erste Laminierschicht (6) und vorzugsweise bis zu 33 Stück Spulen für eine zweite Laminierschicht (7) bereitgestellt,
Klebebänder sind definiert bis zu einer Gewebe- oder Vlies- etc. Auflagestelle führbar.

9. Abstands-Laminier- und/oder -Nähverfahren zur Herstellung von mehrschichtigen, selbstinjizierenden (SI), saugenden und stark quellenden (SQI) Gewirkedichtbändern basierend auf SAP-Vliesen nach einem er Ansprüche 1 bis 7, die in zwei bis über sechs Schichten mit einseitig kaschierten 3D-AB Abstandsgewirken, 3D-Abstands-Gewirken mit Polymergel-Austrittsöffnungen (RPL) oder anderen textilen Geweben mittels selbstklebenden Bändern und/oder Nähfäden in definierten Abständen vorzugsweise über eine Breite bis 160 cm und Längen bis vorzugsweise über 40 m verbunden werden,
über eine fahrbare Führungsvorrichtung zur Aufnahme von vorzugsweise bis zu 33 Stück Spulen Klebeband wird eine erste Laminierschicht (6) und vorzugsweise bis zu 33 Stück Spulen eine zweite Laminierschicht (7) bereitgestellt, Klebebänder werden definiert bis zu einer Gewebe- oder Vlies- etc. Auflagestelle geführt.

10. Verfahren zur Vorbereitung von Kabelrohrdurchführungen, Fugenkammern, Spalten, Rissen, Beton- und Steinvliesüberdeckungen und dergleichen gegen Wasserfortleitung, bei welchem eine Abdichtung nach einem der Ansprüche 1 bis 7 in die abzudichtende Fugenkammer, Spalt, Riss und dergleichen eingebracht wird, um nachfolgend aufgrund von eindringendem Wasser und dem dadurch quellenden und abdichtend wirkendem SAP eine Wasserfortleitung zu verhindern.
